# EUROPEAN PATENT APPLICATION

(11) **EP 4 362 300 A1**
(43) Date of publication of application: **01.05.2024**
(21) Application number: 21946280.1
(22) Date of filing: 22.06.2021
(51) Int. Cl.: H02K 53/00, H02N 11/00

(54) **VERTICAL PROPULSION MAGNETIC GENERATION TURBINE**

(71) Applicant: Tejo Energia Industria Comercio e Servicos Ltda, Rio de Janeiro (BR)
(72) Inventor: DA SILVA, Carlos Sergio, 22.630-010 Rio de Janeiro (BR); VALLADÃO, Marco Antônio, 22.795-065 Rio de Janeiro (BR); JUNIOR, José, 08.775.370 Mogi das Cruzes (BR); AQUILA, Jardel Roberto, 08.775-370 Mogi das Cruzes (BR)
(74) Representative: Hermann, Felix
(86) International application number: PCT/BR2021/050270
(87) International publication number: WO 2022/266729

(57) **Abstract**

The present invention relates to a vertical propulsion magnetic generation turbine (10) comprising a lower section (100) comprising a locking support for the motor (110) enclosed by a lower flange (120) and a support of the external discs of the propulsion system (130) enclosed by an upper flange (140); an upper section (400) comprising at least two sets of first and second lower flanges of the magnets (410, 420; 410', 420'), a magnetic flange of the coils (430; 430') being interposed between each set of first and second lower flanges; a set of flanges (200) seated inside the support of the external discs of the propulsion system (130) comprising at least two sets comprising a first support flange of the internal magnets (210; 250), an external flange of the upper propulsion system (220; 260), an external flange of the disc of the lower propulsion system (230; 270) and a second flange of the support of the internal magnets (240; 280); and an assembly of motor and central shaft (300) comprising an assembly of central shaft (310) and an electric motor (330).

## Description

### TECHNICAL FIELD OF THE INVENTION

The present invention relates to a magnetic generator turbine of electrical energy and, more specifically, to a magnetic generator turbine that It has a set of magnets and other components connected to a vertical magnetic propulsion, to generate electrical energy for residences, industry, and plants, among others.

### INVENTION BACKGROUND

Total energy consumption in Brazil is expected to grow by 2.2% annually until 2040, above the world average of 1.2% annually, according to estimates announced by the BP Group. According to the company, primary energy consumption between 2017 and 2040 will increase from 294 million to 485 million tons of oil equivalent, an increase of 65%. According to the group's numbers, the areas whose consumption will grow the most year after year will be nuclear energy (4.5%), renewables (4.5%) and gas (3.4%), as reflected in the report published on 02/14/2019 by the Estado de Minas newspaper.

The change will lead to a significant change in the share of energy sources in the total matrix. The share of oil in total consumption is expected to fall from 40% in 2017 to 34% in 2040. Gas will rise from 11% to 15% and renewables from 14% to 23%. Energy consumption from hydropower plants is also expected to increase from 84 to 112 tons of oil equivalent. However, the proportion will fall from 28% to 23% between 2017 and 2040, to levels equivalent to renewable energies.

Electricity consumption will grow by 2.8% annually in the period, with total consumption projected to be 89% higher in 2040 compared to 2017. Renewable energy consumption (including biofuels and excluding hydroelectric plants) is expected to increase by 381% between 2017 and 2040, according to BP Group estimates. The total share of the energy model is expected to jump from 4% to 15% of global consumption, the report adds. Along the same lines, gas will gain space in the global energy matrix (from 23% participation in 2017 to 26% in 2040). Petroleum derivatives will occupy part of the space of coal in this balance, whose participation in consumption is expected to fall from 28% in 2018 to 20% in 2040.

The industry will show a 50% jump in consumption, from 114 tons of oil equivalent in 2017 to 172 tons of oil equivalent in 2040, still appearing as the main consumer, with a share of 35% (compared to 39% in 2017). The next will be the use for transportation, whose consumption will grow by 62% in 2040, with a share of 31%. Meanwhile, buildings are expected to see consumption growth of 91 %, which will account for 29% of the country's total usage in 2040.

Given this, some technologies provide technical solutions for the generation of energy through machines and energy generators through electromagnetism.

A solution is presented by Chinese utility model patent CN 207117372, filed by Xu Zhanxin on July 13, 2017 and titled "Multistage generator of vertical axis formula slow-speed of revolution magnetic suspension", which describes a generator low rotation vertical axis slow rotating magnetic suspension multi-stage including a generating mechanism having a vertically arranged rotating axis, the generating mechanism from bottom to top includes the lower fixed disk, the rotating disk and the upper fixed disk; successively arranged coaxially, the rotating shaft passes sequentially through the upper fixed disc, rotating disc and lower fixed disc, the rotating shaft is fixedly connected to the rotating disc, and the rotating shaft is rotatably connected to the upper fixed disc, lower fixed disc. By the set of activation magnets, respectively up and down in the first coil winding and the second coil winding, the peripheral assembly of the disc support structure type three of the tertiary coil winding achieved in rotation speed is relatively low in the case of power also to achieve the objective of generating energy.

Chinese utility model patent CN 208764133, filed by Shanghai Roco Magnetics Co. Ltd. on July 24, 2018, and titled "Vertical axis magnetic levitation device", discloses a maglev vertical axis device, including active spindle, upper self-lubricating position bearing, adjusting screw, support protection box, gear group top magnetic steel, magnetic steel bottom, pedestal, self-lubricating lower positioning bearing, main control shaft, observation window, upper end support protection box provided with self-lubricating positioning bearing, lower support protection box provided with pedestal, lower end of pedestal provided with lower self-lubricating positioning bearing and other components; making it a very complex alternative to apply.

Yet another example is illustrated in patent application BR102013032252-0, filed on December 16, 2013, in the name of Rolf Arturo Blankschein Guthmann, entitled "Magnetic energy generator", which describes an oscillating magnetic mechanical system to generate clean energy of atomic origin without radiation emission. The generator is equipped with two or more magnetic oscillators, which have pistons, equipped with high-power magnetic elements, which are assembled within a fully articulated system that gives them a certain degree of freedom of angular and linear movement, combined with a geometric device that inverts the vector of force, repulsion or attraction of magnets, with which a lever is pushed, and which results in a gain of torque. These magnetic oscillators are arranged circularly and equidistantly around an axis, synchronized by a set of gears, and mounted in such a way that they have an angular offset in which there is always a surplus of torque, that is, magnetic oscillators with positive torque They always compensate for the negative torques generated by the magnetic oscillators that oppose the main direction of rotation.

### INVENTION SUMMARY

The present invention relates to a magnetic generator turbine to generate electrical energy by means of a shaft and motor assembly with horizontal electromagnetic propulsion, which makes use of the electromotive force to generate electrical energy, in direct current with variable voltage depending on the power of each equipment to be powered.

An objective of the present invention is to provide a self-sustained and non-polluting magnetic electric power generator turbine, without the need for external power, that is, an alternative to polluting fuels.

Another objective of the present invention is to provide a magnetic electric energy generating turbine that is easy to install and simple to maintain, ideal for use in any location, such as homes, commerce, industries, rural centers and even power plants.

The objectives of the present invention are achieved with the provision of a vertically propulsion magnetic generator turbine comprising a lower section comprising an engine locking bracket terminated by a lower flange and a support for the external disks of the system propulsion terminated by a top flange; an upper section comprising at least two sets of first and second lower flanges of the magnets, each set of first and second lower flanges being interspersed with a magnetic flange of the coils; a set of flanges, accommodated within the support of the outer discs of the propulsion system, comprising at least two assemblies comprising a first flange that supports the internal magnets, an outer flange of the disc of the upper propulsion system, an outer flange of the lower propulsion system disc and a second flange supporting the internal magnets; and a motor and central shaft assembly comprising a central shaft assembly and an electric motor.

### BRIEF DESCRIPTION OF THE DRAWINGS

The present invention will be better understood based on the following detailed description, together with the accompanying drawings.

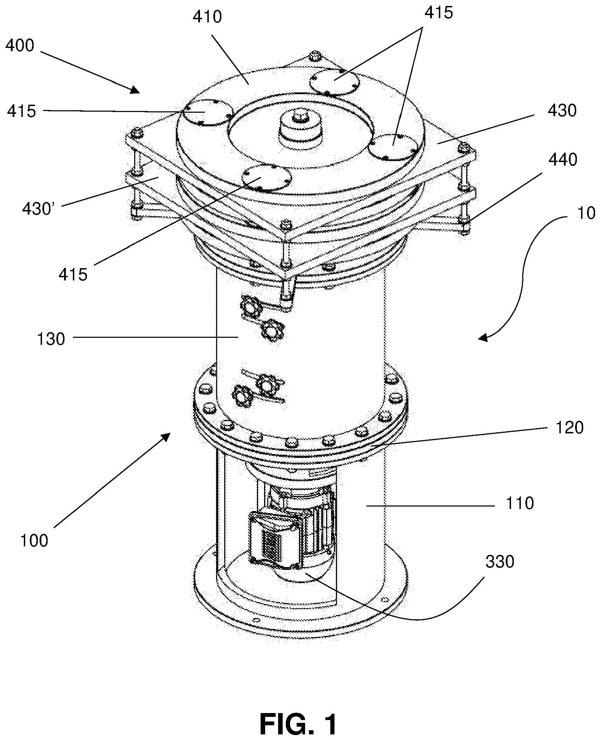

Figure 1 is a perspective view of the vertical propulsion magnetic generator turbine of the present invention.
Figure 2 is a cross-sectional view of the vertical propulsion magnetic generator turbine of the present invention.
Figure 3 is an exploded perspective view of the lower section of the vertical propulsion magnetic generator turbine of the present invention.
Figure 4 is an exploded perspective view of the flange assembly of the vertical propulsion magnetic generator turbine of the present invention.
Figure 5 is an exploded perspective view of the motor assembly and central axis of the vertical propulsion magnetic generator turbine of the present invention.
Figure 6 is an exploded perspective view of the upper section of the vertical propulsion magnetic generator turbine of the present invention.

### DETAILED DESCRIPTION OF THE MODALITY OF THE INVENTION

As can be inferred from the figures, the vertical propulsion magnetic generator turbine 10 of the present invention comprises a lower section 100 comprising a support for the external disks of the propulsion system 130 and an engine locking support 110; a set of tabs 200 housed in the external disk holder 130; a motor and central shaft assembly 300; and an upper section 400.

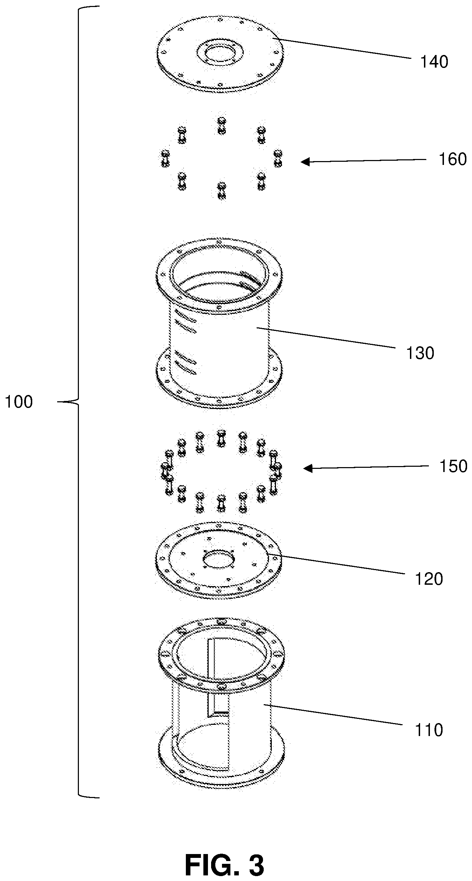

Figure 3 illustrates the lower section 100 of the magnetic generator turbine 10 of the present invention. The lower section, preferably made of metallic material, comprises an engine locking bracket 110 enclosed by a lower flange 120 and a support for the external discs of the propulsion system 130 enclosed by an upper flange 140. The lower flange is secured to the top of the motor lock bracket 110 and to the bottom of the external disc bracket 130 by a first set of fastening means 150. The upper flange is secured to the top of the outer disc holder 130 by a second set of fastening means 160.

The lower and upper tabs 120, 140 are responsible for the magnetization of the coils, where the output power will be generated.

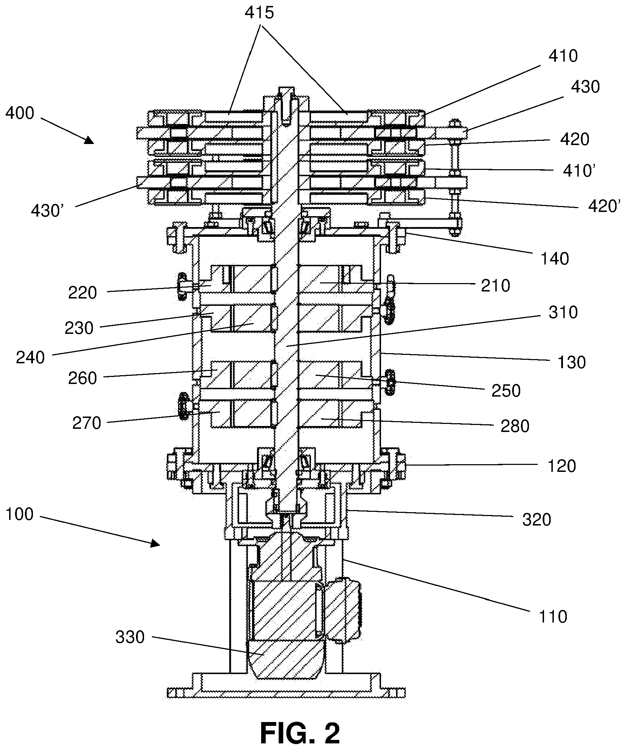

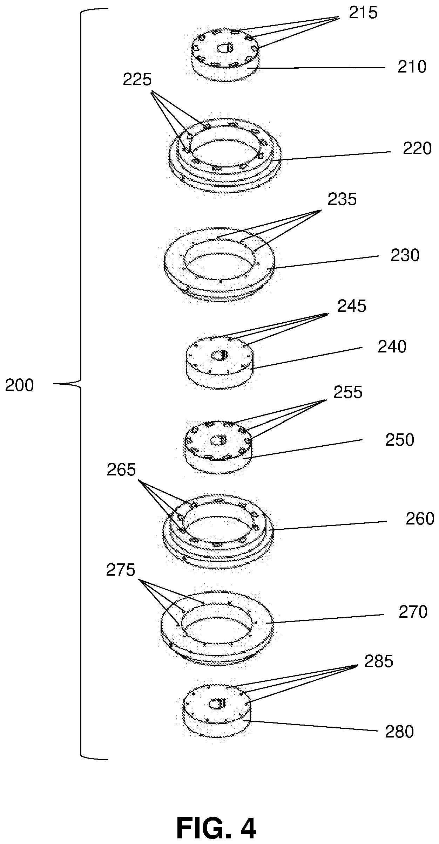

The tab assembly 200 of Figure 4 is received within the external disk holder 130, as can be seen in the cross-sectional view illustrated in Figure 2.

The flange assembly 200 includes a first upper support flange of the internal magnets 210, an outer flange of the first upper disc 220 of the propulsion system, an outer flange of the first lower disc 230 of the propulsion system, a second flange of the upper support of the internal magnets 240, a first lower support flange of the internal magnets 250, an external flange of the second disc of the upper propulsion system 260, an outer flange of the second disc of the lower propulsion system 270, and a second lower support flange of the inner magnets 280. Together, the flanges of flange assembly 200 form a propulsion motor.

Both the first and second upper support flanges of the internal magnets 210, 240 and the first and second lower support flanges of the internal magnets 250, 280 perform the contraction of the external magnets where the force to rotate is produced the central axis.

The external tabs of the first disk 220, 230 and the external tabs of the second disc 260, 270 are responsible for supporting the magnets that provide the contraction force of the internal magnets.

Each of the flanges of the flange assembly 200 is preferably made of polyamide, which has excellent resistance to wear and traction, and contains magnetic elements 225, 235, 245, 255, 265, 275, 285 incorporated therein. The polyamide used as an example is nylon. The magnetic elements can be made of material selected from neodymium (Nd), ferrite, alnico (AiNiCo), samarium cobalt (SmCo), among other materials with magnetic properties.

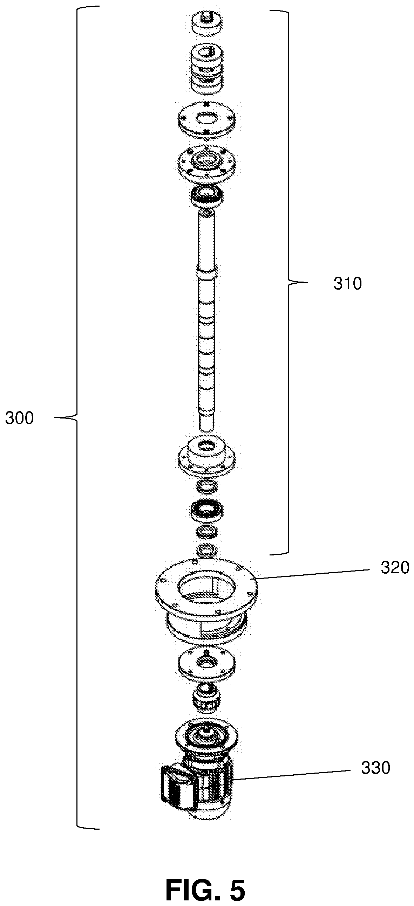

Figure 5 illustrates the motor and central shaft assembly 300 comprising a central shaft assembly 310, a motor locking handle 320, and an electric motor 330. The electric motor 330 is housed within the motor lock bracket 110 and attached to the motor lock handle 320. The upper portion of the motor lock strap 320 is further attached to the lower portion of the lower flange 120 of the lower section 100.

The motor 330 is used to start the magnetic generator turbine, in addition to being responsible for stabilizing the rotation of the set of magnetic elements through a frequency inverter. Thereafter, the electric motor 330 is only used to power the command and control of the turbine of the magnetic generator 10. The central shaft assembly 310 is connected to the electric motor and runs longitudinally through the lower and upper sections 100, 400 of the turbine of magnetic generator 10.

As already mentioned, the center shaft assembly 310 is responsible for supporting the first and second upper support flanges of the internal magnets 210, 240.

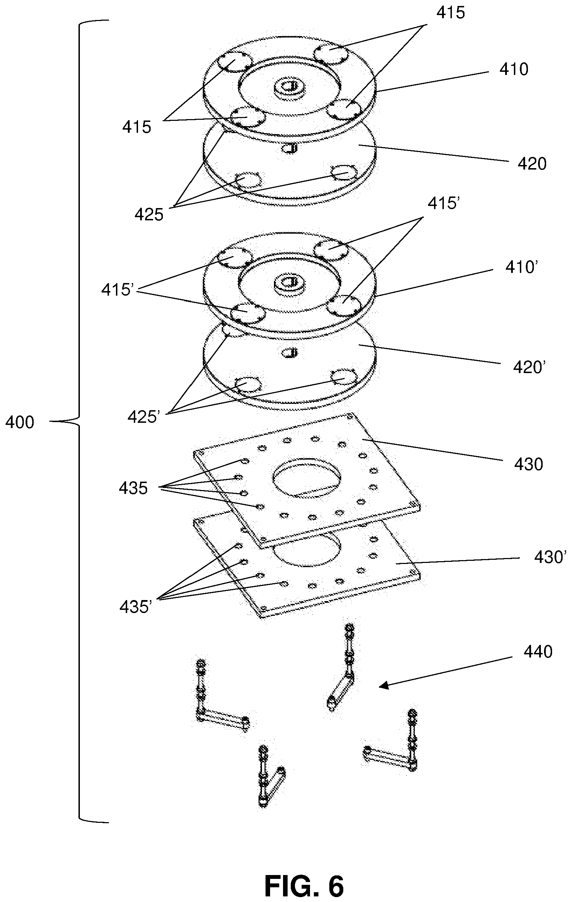

Figure 6 shows the upper section 400 of the turbine of the magnetic generator 10 of the present invention. The upper section 400 comprises two sets of first and second lower magnetic flanges 410, 420, 410', 420' provided with a plurality of magnetic elements 415, 425, 415', 425' interspersed with first and second magnetic coil flanges 430, 430'. The first and second magnetic flanges of the coils are secured to each other by a set of fastening means 440. The first and second bottom tabs of the magnets 410, 420; 410', 420' are preferably made of polyamide, more preferably nylon, while the first and second magnetic flanges of the coils 430, 430' are made of resin.

The first and second magnetic flanges 430, 430' comprise a plurality of coils 435, 435', preferably of copper, wound with a number of turns corresponding to the energy to be generated. For example, a 5 kVA turbine generator uses four coils of 230 turns each. By increasing the number of lower magnetic tabs 410, 420, 410', 420' and coils 435, 435' on the first and second magnetic tabs 430, 430', greater power is obtained. The magnetic flanges 430, 430' may include, for example, up to 15 coils each.

Rotation of the two sets of first and second lower flanges of magnets 410, 420; 410', 420' causes the magnetic generator turbine 10 of the present invention to generate electrical energy.

Power generation is carried out through coils 435, 435' in the first and second magnetic flanges 430, 430', the electromagnetic induction force coming from the magnetic elements of the set of flanges 200.

The batteries (not illustrated) are responsible for starting the generator, causing the movement of the turbine 10, and thus initiating the movement of the flanges and, consequently, of the magnetic elements contained therein.

The shaft assembly 300 of the generating turbine 10 of the present invention, with the magnetic elements of the flange assembly 200, is connected to a magnetic mechanical force. This assembly forms a stator, which causes the magnetic elements to push and rotate.

The two sets of first and second lower magnet flanges 410, 420; 410', 420' act as weight compensators. The system has weight to equal the inertia of the weight that forms the energy generation systems that have forces where the magnetic elements with a repulsion above, for example, 7 thousand rpm, make the opposite friction no longer influence, gaining opposite speed, which increases its speed and converts its magnetic energy into electrical energy, leaving the turbine 10, and passing through a stabilizer followed by a power plate, thus forming a pure sine wave, which can be used in any device.

The magnetic generator, according to the present invention, can also comprise a measurement and control assembly (not illustrated) of the central axis assembly 310 of the turbine 10, responsible for accelerating or reducing the rotation, thus synchronizing the magnetic elements between yes with the motor and central shaft assembly 300, providing constant movement to the entire system.

It should be noted that variations, modifications and alterations of the invention described herein are possible for those skilled in the art, without departing from the spirit and scope of the present invention or equivalents thereof, covered by the attached claims and their equivalents.

## Claims

1. Vertical propulsion magnetic generator turbine **characterized by** comprising:
a lower section (100) comprising an engine locking bracket (110) enclosed by a lower flange (120) and a support for the external discs of the propulsion system (130) enclosed by an upper flange (140);
an upper section (400) comprising at least two sets of first and second lower magnetic flanges (410, 420; 410', 420') containing a plurality of magnetic elements (415, 425, 415', 425'), being sandwiching each set of first and second bottom flanges by a magnetic coil flange (430; 430') containing a plurality of coils (435, 435');
a set of flanges (200), accommodated within the support of the external discs of the propulsion system (130), comprising at least two sets comprising a first flange that supports the internal magnets (210; 250), an external flange of the system disc upper propulsion system disc (220; 260), an outer flange of the lower propulsion system disc (230; 270), and a second flange of the internal magnetic support (240; 280), each flange of the assembly flange (200) is provided with magnetic elements (225, 235, 245, 255, 265, 275, 285);
a motor and central shaft assembly (300) comprising a central shaft assembly (310) and an electric motor (330).

2. Vertical propulsion magnetic generator turbine, according to claim 1, **characterized in that** the lower section (100) is made of metallic material.

3. Vertical propulsion magnetic generator turbine, according to claim 1, **characterized in that** the magnetic element is made of material selected from neodymium, ferrite, alnico, samarium cobalt, among other materials with magnetic properties.

4. Vertical propulsion magnetic generator turbine according to claim 1, **characterized in that** each of the first and second magnetic flanges (430, 430') includes up to fifteen coils (435, 435').

5. Vertical propulsion magnetic generator turbine according to claim 4, **characterized in that** each of the first and second magnetic flanges (430, 430') includes four coils (435, 435').

6. Vertical propulsion magnetic generator turbine, according to claim 4 or 5, **characterized in that** each coil (435, 435') has 230 turns.

7. Vertical propulsion magnetic generator turbine, according to claim 4 or 5, **characterized in that** the coils (435, 435') of the first and second magnetic flanges (430, 430') are made of copper.
